Europäisches Patentamt

European Patent Office

Office européen des brevets

(19)

(11) Publication number: **0 091 180**
A2

(12) **EUROPEAN PATENT APPLICATION**

(21) Application number: 83300356.9

(22) Date of filing: 25.01.83

(51) Int. Cl.³: **C 08 G 63/36**
C 08 G 63/20, B 01 J 31/26

(30) Priority: 04.02.82 US 345859

(43) Date of publication of application:
12.10.83 Bulletin 83/41

(84) Designated Contracting States:
AT BE CH DE FR GB IT LI NL SE

(71) Applicant: Rohm and Haas Company
Independence Mall West
Philadelphia, Pennsylvania 19105(US)

(72) Inventor: Cholod, Michael Stefan
6409 Todd Court
Cornwells Heights Pennsylvania 19020(US)

(72) Inventor: Shah, Nipun Manubhai
1315 Naupon Drive
Fayetteville North Carolina 28301(US)

(74) Representative: Angell, David Whilton et al,
Rohm and Haas Company Patent Department
Chesterfield House Bloomsbury Way
London WC1A 2TP(GB)

(54) Catalyst system for polycondensation of ethylene terephthalate prepolymer.

(57) A catalyst system for polycondensation of ethylene terephthalate prepolymer comprises 2 to 18 parts by weight of catalyst metal in the form of alkyl titanate and 40 to 300 parts by weight of catalyst metal in the form of antimony compound.

EP 0 091 180 A2

Croydon Printing Company Ltd.

CATALYST SYSTEM FOR POLYCONDENSATION OF ETHYLENE TEREPHTHALATE PREPOLYMER, PROCESS FOR MAKING ETHYLENE TEREPHTHALATE POLYMER AND POLYMER CONTAINING CATALYST

This invention concerns a catalyst system for use in polycondensation of ethylene terephthalate prepolymer, a process for making ethylene terephthalate polymer and such polymer containing the catalyst system.

The present catalyst system may be used in attractively low amounts to achieve a speedy polycondensation of ethylene terephthalate prepolymer to polymer of an intrinsic viscosity of 0.60 decaliters per gram (dl/g).

U.S.-A-4,010,145 discloses a catalyst-inhibitor system for polymerization of ethylene terephthalate for fabrication of fibers and films. The catalyst-inhibitor system comprises a combination of organic or inorganic salts of manganese and cobalt; titanium alkoxides and antimony compounds; and a phosphate ester. Ester interchange between dimethyl terephthalate and ethylene glycol is conducted in the presence of the catalyst system and subsequently a phosphate ester is added before polycondensation of the product obtained from this ester interchange.

In this known ester interchange catalyst system the manganese and cobalt salts and an antimony compound are used in an amount providing 50 to 300 parts per million of antimony and a titanium alkoxide in an amount providing 20 to 60 ppm of titanium.

Such quantities of titanium could result in products having a yellow coloration. Additionally, the polyethylene terephthalate product can exhibit poor thermal stability (i.e. on regrinding resin prepared by this method high acetaldehyde content and reduced intrinsic viscosity was observed. When the reground resin was formulated into an article, such as a bottle, stored liquids acquired an off-taste from the acetaldehyde and the bottle had reduced mechanical strength.

This known process was economically disadvantageous as more time was required to produce a polyethylene terephthalate polycondensation resin suitable for producing articles such as a bottle.

It is an object of this invention to provide a catalyst system for polycondensation of ethylene terephthalate prepolymer.

Another object is to provide a catalyst system which may enable faster polycondensation reaction.

Broadly, this invention provides a catalyst system for polycondensation of ethylene terephthalate prepolymer comprising 2 to 18 parts by weight of catalyst metal in the form of alkyl titanate and 40 to 300 parts by weight of catalyst metal in the form of antimony compound.

We have surprisingly found that the above objects could be achieved with a catalyst system which incorporates less titanium metal, together with an antimony compound, which system need not be present in the ester interchange or direct esterification used to make the prepolymer.

The ethylene terephthalate prepolymer may be formed by an ester interchange reaction or by direct esterification of ethylene glycol and terepthalic acid.

If the prepolymer is formed by an ester interchange, then ethylene glycol and dimethyl terephthalate may be used. The reaction may generally be conducted under atmospheric pressure and at a temperature of $160^\circ$ C. to $225^\circ$ C. During the reaction, methyl alcohol is distilled off as a by-product.

If the prepolymer is to be prepared by direct esterification of ethylene glycol and terephthalic acid, the reaction may be conducted under a pressure of 1 or 2 atmospheres and at a temperature of $220^\circ$ C. to $260^\circ$ C. During esterification, water is distilled off.

Although the direct esterification reaction may be conducted without a catalyst, a catalyst is often used to reduce esterification time, minimize the diethylene glycol content of the final ethylene terephthalate polymer product and to improve the color. Among preferred esterification catalysts which may be used are zinc acetate, calcium acetate, titanium ethoxide, manganous acetate and/or antimony oxalate.

The direct esterification reaction is considered complete when no further water is distilled off or the amount of water distilled is 90% to 95% of the theoretical yield.

The molar amount of ethylene glycol used per mole of dimethyl terephthalate or terephthalic acid may vary from 1.8 to 2.2 moles of ethylene glycol per mole of dimethyl terephthalate or mole of terephthalic acid and preferably the molar ratio will be 2 to 1.

If less than 1.8 moles of ethylene glycol are used per mole of terephthalic acid or dimethyl terephthalate, then the reaction will not go to completion efficiently. If an amount in excess of 2.2 moles of ethylene glycol is used, then excess glycol is present although this may result in a faster reaction rate. However, the economic disadvantage of using excess glycol may offset the faster reaction rate.

The amount of metal containing catalyst that may be used in the ester interchange reaction can vary widely. Generally, the amount of catalyst present may be 20 to 200 parts by weight of catalyst metal, per million parts of dimethyl terephthalate.

Among the catalysts which may be used for the ester interchange reaction are manganous acetate, lithium acetate, sodium methylate, magnesium acetate, cobalt acetate, calcium acetate, cobalt dichloride, manganese acetate tetrahydrate and/or zinc acetate.

The ester interchange reaction is considered complete when, at a temperature of $160^\circ$ to $225^\circ$ C., either the amount of methanol distilled from the reaction is 90 to 95% of the theoretical yield or no further methanol is removed.

After the ester interchange or direct esterification reaction is completed, the reaction mixture containing the ethylene terephthalate prepolymer is then polycondensed. The polycondensation reaction may be conducted at a temperature of $265^\circ$ C. to $300^\circ$ C and at a vacuum of less than 1 torr.

The polycondensation catalyst system can be added after the ester interchange reaction is completed. If the catalyst system is added at the ester interchange stage, then a reduced polycondensation time might not be obtained.

In one aspect of the invention a process is provided for making ethylene terephthalate polymer by polycondensation wherein the catalyst system is used in the stated parts by weight per million parts of polymer and/or prepolymer therefor.

A further aspect provides ethylene terephthalate polymer containing a catalyst system according to the invention in the stated parts by weight per million parts of polymer.

A preferred polymer comprises ethylene terephthalate polymer containing 10 to 14 parts of catalyst metal in the form of tetraisopropyl titanate and 100 to 160 parts of catalyst metal in the form of antimony trioxide, both amounts being per million parts of polymer, and wherein 0.2 to 0.5 mole percent of the polymer is branched and comprises pentaerythritol units and wherein up to 2% by number of the repeating units of said polymer comprise dimethylisophthalate units.

The alkyl titanate used may be any alkyl titanate such as titanium tetraisobutoxide, tetraisopropyl titanate, tetra-n-butyl-titanate, tetramethyl titanate, acetyl triisopropyl titanate and/or tetraisobutyl titanate.

It is preferred, however, that the alkyl titanate be present in the catalyst system in an amount to provide 8 to 15 parts by weight of titanium catalyst metal.

The second component of the polycondensation catalyst system is an antimony compound which is present in polymer according to the invention in an amount to provide 40 to 300 parts by weight of antimony catalyst metal, per million parts of polymer product.

Among the antimony compounds which may be used are antimony trioxide, antimony glucoxide, antimony butoxide and/or acetyl antimony dibutoxide.

It is preferred, however, that the antimony compound be present in an amount to provide 75 to 150 parts by weight of catalyst metal.

In a particularly preferred embodiment, the ethylene terephthalate polymer will contain a catalyst system which comprises from 10 to 14 parts by weight of catalyst metal in the form of tetraisopropyl titanate and 100 to 160 parts by weight of catalyst metal in the form of antimony trioxide; said parts by weight of metal each being per million parts of polymer product.

A chain branching agent may also be present during the polycondensation reaction. The presence of a chain branching agent is often desirable to increase the melt viscosity of the final ethylene terephthalate polymer resin.  The chain branching agent may be present at any stage during the preparation of the ethylene terephthalate polymer resin.  Thus, the chain branching agent may be added during the ester interchange reaction, or it may be added during the polycondensation reaction itself.  If a chain branching agent is used, it may be present in an amount of 0.1 to 2 mole percent based on the moles of dimethyl terephthalate present (or of terephthalic acid which may be present, if the prepolymer is formed by the direct esterification reaction between ethylene glycol and terephthalic acid.)

It is preferred that, when a chain branching agent is present, it is used in an amount to provide up to 2 mole percent of the ethylene terephthalate polymer as branched units, because the effect of the chain branching agent is thereby maximized.

Among the chain branching agents which may be used are pentaerythritol, dimethylol propionic acid and/or trimesic acid.

When preparing the ethylene terephthalate polymer, the starting materials may include other acidic comonomers besides dimethyl terephthalate and/or terephthalic acid, so that the final product may have up to 2% based on the number of repeating units in the polymer of repeating units other than those derived from dimethyl terephthalate or tereaphthalic acid.  Other comonomers which may be present in an amount of up to about 2% based on the number of repeating units in the polymer, as aforesaid, may be diethylene glycol, isophthalic acid, dimethylisophthalate, propane-1, 3-diol, butane-1, 4-diol, polytetramethylene glycol, polyethylene glycol, polypropylene glycol, 1, 4-hydroxymethylcyclohexane, bibenzoic acid, naphthalene 1,4- or 2,6-dicarboxylic acid, adipic acid, sebacic acid, decene-1, 10-dicarboxylic acid and/or esters thereof.

It should be understood that, when the ethylene terephthalate prepolymer is prepared by an ester interchange reaction, any other comonomers which are included are all esters, and when the direct esterification route is used, such other comonomers are all acids.

Other glycols besides ethylene glycol may be included in an amount so that the final product may have up to 2% based on the number of repeating units in the polymer of repeating units other than those derived from ethylene glycol. Such other glycols include neopentyl glycol, propylene glycol and/or butylene glycol.

The ethylene terephthalate polymer resin may also include various additives, such as antioxidant stabilizers, ultraviolet light screening agents, extrusion aids, dyes or pigments and mold release agents. Whichever additive or additives are used they should not adversely affect the intended use of the final polymer.

If desired, the molecular weight of the resultant resin may be increased by heating the resin above its glass transition temperature but below its melting point and passing a stream of an inert gas over the resin or by holding the resin under vacuum for a period of 8 to 14 hours and at a temperature of $200^{\circ}$ C. to $235^{\circ}$ C.

In the examples which follow, intrinsic viscosity (IV) is determined in a 60/40 phenol/symmetrical tetrachloroethane at $30^{\circ}$ C.

In order that the invention may be further illustrated the following examples are presented.

## General Procedure

To a three-necked reaction vessel equipped with a stirrer, a condensor arranged for distillation, and a· thermometer, is added 1,000 parts of dimethyl terephthalate, 626 parts of ethylene glycol, 0.07 part of manganese as manganous acetate (70 parts per million of final product), and 0.02 part of cobalt as cobalt acetate (20 parts per million of final product). The reaction mixture is heated at a temperature of 160°C. to 225° C. for a period of 97 minutes while removing 290 parts of methanol. Phosphorus acid (0.148 part) is then added as a stabilizer. The ester interchange is considered complete when 90 to 95% of the theoretical yield of methanol is removed, or when no further methanol is removed. The polycondensation catalyst system is then added in amounts as set forth in the following table. The polycondensation catalyst system used is tetraisopropyl titanate and antimony trioxide. The pressure is reduced to less than 1 torr and the reaction temperature is increased to 280° C. to 290° C. to remove ethylene glycol by-product. The intrinsic viscosity is then measured, as is the time required to complete the polycondensation reaction (i.e. the time required to reach an intrinsic viscosity (IV) of 0.6 dl/g).

For comparative purposes, several examples are conducted where the polycondensation catalyst is either titanium or antimony, but not in combination with one another.

TABLE I

| Examples | Polycondensation Catalyst (PC) | Amount of PC (Parts of Metal Per Million Parts Of Final Product) | Time Required (Minutes) to Obtain an IV of 0.6 (dl/g) |
|---|---|---|---|
| 1 | Tetraisopropyl titanate | 2 | 250 |
| 2 | Antimony trioxide | 60 | 240 |
| 3 | Antimony trioxide | 240 | 115 |
| 4 | Antimony trioxide | 120 | 123 |
| 5 | Antimony trioxide and tetraiso-propyl titanate | 50 8 | 65 |

0091180

Examples 6 through 9

In examples 6 through 9, the general procedure is repeated, except that, as indicated in the table below, all of the catalysts are added both at the ester interchange reaction, as well as added, in a different run, only at the polycondensation stage. The polycondensation time is then measured for the ester interchange added catalyst system and for the polycondensation added catalyst system. Additionally, in some instances, as indicated in the table below, only titanium is used as the catalyst and is added both at the ester interchange stage, as well as added, in a different run, only at the polycondensation stage. In all other respects, the general procedure is repeated.

The results are as follows:

TABLE II

| Examples | Polycondensation Catalyst (PC) | Amount of PC (Parts of Metal Per Million Parts of Final Product) | Time Required (Min.) to Reach IV of 0.60 (dl/g) (When PC Added at Ester Interchange Reaction Stage) | Time Required (Min.) to Reach IV of 0.60 (dl/g) (When PC Added at Polycondensation Reaction Stage) |
|---|---|---|---|---|
| 6 | Tetraisopropyl titanate | 10 | 135 | 84 |
| 7 | Tetraisopropyl titanate (resultant resin is yellow) | 19.5 | 70 | 49 |
| 8 | Tetraisopropyl titanate and antimony trioxide | 10 100 | 60 | 51 |
| 9 | Tetraisopropyl titanate and antimony trioxide (resultant resin is a very slight yellow) | 18 100 | 52 | 45 |

0091180

- 11 -

CLAIMS:

1.    A catalyst system for polycondensation of ethylene terephthalate prepolymer comprising 2 to 18 parts by weight of catalyst metal in the form of alkyl titanate and 40 to 300 parts by weight of catalyst metal in the form of antimony compound.

2.    A catalyst system according to claim 1 wherein said alkyl titanate is present in an amount to provide 8 to 15 parts by weight of catalyst metal.

3.    A catalyst system according to claim 1 or 2 wherein said antimony compound is present in an amount to provide 75 to 150 parts by weight of catalyst metal.

4.    A catalyst system according to any preceding claim wherein said alkyl titanate comprises tetraisopropyl titanate, tetra-n-butyl titanate, tetramethyl titanate, acetyl triisopropyl titanate and/or tetraisobutyl titanate.

5.    A catalyst system according to any preceding claim wherein said antimony compound comprises antimony trioxide, antimony glucoxide, antimony butoxide and/or acetyl antimony dibutoxide.

6.    A process for making ethylene terephthalate polymer by polycondensation wherein a catalyst system as claimed in any preceding claim is used in the stated parts by weight per million parts of final polymer and/or prepolymer therefor.

7.    A process according to claim 6 wherein the prepolymer used is such as to provide up to 2 mole percent of the final ethylene terephthalate polymer as branched units.

8.    A process according to claim 7 wherein the prepolymer incudes pentaerythritol, dimethylol propionic acid and/or trimesic acid.

9.    A process according to any of claims 6 to 8 wherein said prepolymer is such as to provide up to 2%, based on the number of repeating units in the final polymer of units other than ethylene terephthalate units.

10.    A process according to any of claims 6 to 9 wherein the final polymer includes units derived from isophthalic acid, dimethylisophthalate, neopentyl glycol and/or diethylene glycol.

11.    Ethylene terephthalate polymer containing from 2 to 18 parts by weight of polycondensation catalyst metal in the form of alkyl titanate and 40 to 300 parts by weight of catalyst metal in the form of antimony compound per million parts by weight of said polymer.

12.    Polymer as claimed in claim 11 containing 10 to 14 parts of catalyst metal in the form of tetraisopropyl titanate and 100 to 160 parts of catalyst metal in the form of antimony trioxide, both amounts being per million parts of polymer, and wherein 0.2 to 0.5 mole percent of the polymer is branched and comprises pentaerythritol units and wherein up to 2% by number of the repeating units of said polymer comprise dimethylisophthalate units.

CLAIMS:

1.      A method of making a catalyst system for polycondensation of ethylene terephthalate prepolymer which comprises forming an admixture of 2 to 18 parts by weight of catalyst metal in the form of alkyl titanate and 40 to 300 parts by weight of catalyst metal in the form of antimony compound.

2.      A method according to claim 1 wherein said alkyl titanate is present in an amount to provide 8 to 15 parts by weight of catalyst metal.

3.      A method according to claim 1 or 2 wherein said antimony compound is present in an amount to provide 75 to 150 parts by weight of catalyst metal.

4.      A method according to any preceding claim wherein said alkyl titanate comprises tetraisopropyl titanate, tetra-n-butyl titanate, tetramethyl titanate, acetyl triisopropyl titanate and/or tetraisobutyl titanate.

5.      A method according to any preceding claim wherein said antimony compound comprises antimony trioxide, antimony glucoxide, antimony butoxide and/or acetyl antimony dibutoxide.

6.      A process for making ethylene terephthalate polymer by polycondensation wherein a catalyst system formed by a method as claimed in any preceding claim is used in the stated parts by weight per million parts of final polymer and/or prepolymer therefor.

7.      A process according to claim 6 wherein the prepolymer used is such as to provide up to 2 mole percent of the final ethylene terephthalate polymer as branched units.

8. A process according to claim 7 wherein the prepolymer includes pentaerythritol, dimethylol propionic acid and/or trimesic acid.

9. A process according to any of claims 6 to 8 wherein said prepolymer is such as to provide up to 2%, based on the number of repeating units in the final polymer of units other than ethylene terephthalate units.

10. A process according to any of claims 6 to 9 wherein the final polymer includes units derived from isophthalic acid, dimethylisophthalate, neopentyl glycol and/or diethylene glycol.

11. A process as claimed in any of claims 6 to 10 wherein the catalyst system is used in the stated parts by weight per million parts of polymer.

12. A process as claimed in claim 11 wherein the catalyst system contains 10 to 14 parts of catalyst metal in the form of tetraisopropyl titanate and 100 to 160 parts of catalyst metal in the form of antimony trioxide, and wherein 0.2 to 0.5 mole percent of the polymer is branched and comprises pentaerythritol units and wherein up to 2% by number of the repeating units of said polymer comprise dimethylisophthalate units.